# EUROPEAN PATENT APPLICATION

(11) **EP 1 187 078 A2**
(43) Date of publication of application: **13.03.2002**
(21) Application number: 01307146.9
(22) Date of filing: 22.08.2001
(51) Int. Cl.: G07F 17/16, G11B 27/028

(54) **Providing electronic content**

(30) Priority: 24.08.2000 JP 2000259360
(71) Applicant: SONY CORPORATION, Tokyo 141 (JP)
(72) Inventor: Enari, Masahiko, Shinagawa-ku, Tokyo 141 (JP)
(74) Representative: Pratt, Richard Wilson

(57) **Abstract**

Music is downloaded by using an information terminal installed in a store. This enables a user to rapidly specify and purchase a desired electronic content by using the information terminal in the store. The user accesses a server containing information on electronic contents by using a user terminal such as a mobile phone, retrieves a desired electronic content from among the electronic contents, and acquires an identification code for identifying the retrieved electronic content. By inputting the identification code acquired by using the user terminal to the information terminal, the desired electronic content is specified without performing an electronic content retrieving process. As a result, the user can rapidly perform a process of purchasing the desired electronic content.

## Description

### BACKGROUND OF THE INVENTION

### 1. Field of the Invention

The present invention relates to a method of electronically providing content, a system for electronically providing content, a computer program, a recording medium, apparatus for providing content and apparatus for receiving content.

An embodiment of the present invention relates to a system that provides a service of downloading music by using information terminals installed in stores. Another embodiment relates to a system and method in which, by using a user terminal for a process of retrieving an electronic content or the like, a desired electronic content is rapidly specified for purchase by using an information terminal.

### 2. Description of the Related Art

Conventionally, concerning music as a type of electronic contents, a method has been proposed in which in places such as convenience stores or station stalls, music is sold in a form in which it is downloaded to recording media such as magneto-optical disks and memory cards.

In the proposed method, by connecting a terminal unit provided in each store and a distribution center by wire, contents desired by a user are downloaded to a recording medium of the user via the terminal unit. Two constructions have been proposed. In one of them, contents stored beforehand after being downloaded to the terminal unit are downloaded to the recording medium of the user. In the other one, contents are downloaded to the recording medium of the user in real. Also, concerning the terminal unit, a type in which the terminal unit is used for other services such as the sale of tickets and a dedicated type terminal unit only for music have been proposed.

In addition to these proposed constructions, in this type of the sale of music, by using various types of data-compression techniques to perform data compression on audio data, desired contents can be downloaded in a short time. In this connection, when a 2-channel audio signal is sampled at a frequency of 48 kilohertz and is quantized in 16 bits, the amount of information is 1.536 megabits per second (2 by 48 kilohertz by 16 bits), and when this is data-compressed to 1/6 by using the Layer 2 Method, the data transfer speed is 256 kilobits per second. Accordingly, in the case of, for example, 5-minute music, the size of a file obtained by the data compression is 9.6 megabytes (256 kilobits/second by 60 seconds by 5 minutes divided by 8 bits), and this makes it possible to record approximately nineteen pieces of music (approximately 97 minutes) in a 128-megabyte memory.

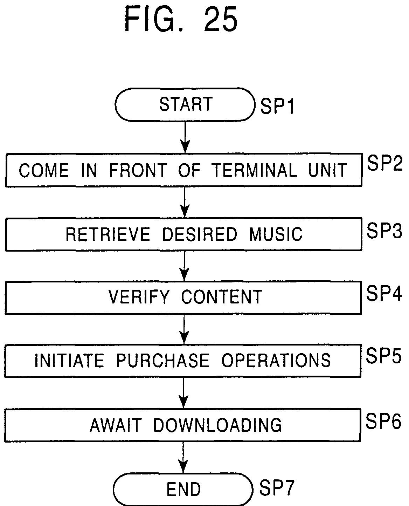

In the sale of music using the above form, in summary, a terminal unit provided in a store is used to accept an operation by a user, and contents desired by the user are downloaded to a predetermined recording medium. The user purchases music in accordance with the sequence shown in Fig. 25.

Specifically, at first, proceeding from step SP1 to step SP2, the user comes in front of the terminal unit, and in the next step SP3, the user retrieves desired music. When finding the desired music, the user verifies the content to purchase in the next step SP4. In step SP5, the user initiates successive purchase operations by performing the operation of inputting a method of payment, etc. By performing the purchase operation, downloading to the recording medium is awaited in the next step SP6. In step SP7, the successive operations terminate the continuous sequence.

In the case of executing the continuous sequence, among users, there is a user who visits a store in order to purchase desired music. The user needs to use an in-store information terminal to perform in step SP3 a process for retrieving desired music for purchase from a list of pieces of music. Normally, in such an in-store information terminal, tens of thousands of pieces of music are hierarchically recorded by genre or in order of sales, so that it is difficult to retrieve the desired piece of music. Accordingly, for retrieving the desired piece of music from the recorded pieces of music, at least several minutes are required. In a case in which the user has not decided yet a desired piece of music for purchase and tries to listen to music, an addition time is required. As a result, a problem occurs in that one user occupies the information terminal during several minutes. When there is also a possibility that the desired piece of music has not been sold yet by this type of distribution form, and when the price does not meet the user's requirement, or when the desired piece of music cannot be found out, not only a useless time of the user occurs, but also the information terminal is meaninglessly occupied by the user.

Conversely, in stores in which priority is given to the above convenience, if the successive operations up to purchase take time, or the user occupies a terminal unit uselessly, as described above, the stores may lose an opportunity for sale to other users because there is limitation in places for installing terminal units and the number of terminal units in connection with the sale of other goods. In particularly, users who use the stores include people who come to the stores in order not to purchase music, and to the people, the effects of advertisement such as introduction of goods are weakened. Also in this aspect, the opportunity of sale is lost.

Therefore, in the above music distribution, by enabling the user to easily and securely select and purchase desired contents, it is possible that the loss of the opportunity can be reduced.

### SUMMARY OF THE INVENTION

Accordingly, an embodiment of the present invention seeks to provide a system and method which enable a user to rapidly specify and purchase a desired electronic content by using an information terminal in a store.

In an embodiment, in the system and method, the user accesses a server containing information on electronic contents by using a user terminal such as a mobile phone, retrieves a desired electronic content from among the electronic contents, and acquires an identification code for identifying the retrieved electronic content. By inputting the identification code acquired by using the user terminal to the information terminal, the desired electronic content is specified without performing an electronic content retrieving process. As a result, the user can rapidly perform a process of purchasing the desired electronic content.

To this end, according to an aspect of the present invention, there is provided an electronic content providing method for performing electronic content provision to a user by using an information terminal. Preferably the terminal is in a store. The electronic content providing method includes the steps of acquiring an identification code for identifying an electronic content which is retrieved from among a plurality of electronic contents by using a user terminal linked via a network to a server in which the electronic contents are recorded, and supporting the downloading of the retrieved electronic content to a recording medium by inputting the identification code to the information terminal, without performing at the information terminal a process for retrieving a specified electronic content from the electronic contents.

According to another aspect of the present invention, there is provided an electronic content providing method for performing electronic content provision to a user by using an information terminal. The terminal is preferably in a store. The electronic content providing method includes the steps of downloading, to a portable recording medium, an identification code for identifying an electronic content which is retrieved from among a plurality of electronic contents by using a user terminal linked via a network to a server in which the electronic contents are recorded, and supporting the downloading of the retrieved electronic content to the recording medium by supplying the identification code from the recording medium to the information terminal, without performing at the terminal a process for retrieving a specified electronic content from the electronic contents.

According to another aspect of the present invention, there is provided an electronic content providing method for performing electronic content provision to a user by using an information terminal. The terminal is preferably in a store. The electronic content providing method includes the steps of retrieving a content from a plurality of electronic contents by using a user terminal linked via a network to a server in which the electronic contents are recorded, and downloading an identification code for identifying the retrieved electronic content, verifying the retrieved electronic content by inputting the downloaded identification code to the information terminal, without performing, at the terminal a process for retrieving a specified electronic content from the electronic contents, and downloading the retrieved electronic content to a recording medium loaded into the information terminal.

According to another aspect of the present invention, there is provided an electronic content providing method for performing electronic content provision to a user by using a terminal. The terminal is preferably a store terminal in a store. The electronic content providing method includes the steps of acquiring an identification code for identifying an electronic content which is retrieved from a plurality of electronic contents by using a user terminal to access via a network a server in which the electronic contents are recorded, inputting the identification code to the store terminal, without using the terminal to perform a process for retrieving a specified electronic content from the electronic contents, and supporting the purchase of the electronic content corresponding to the identification code.

According to another aspect of the present invention, there is provided an electronic content providing method for performing electronic content provision to a user by using a terminal, which is preferably installed in a store and which is linked via broadband link to a server in which a plurality of electronic contents are recorded. The electronic content providing method includes the steps of acquiring an identification code for identifying an electronic content which is retrieved from the electronic contents by using a user terminal linked via a narrowband link to the server, supporting the purchase of the electronic content corresponding to the identification code by inputting the identification code to the store terminal, without using the terminal to perform a process for retrieving a specified electronic content from the electronic contents.

According to the present invention, as described above, by performing retrieval of an electronic content or the like, and issuing an identification code, a content desired by a user can be easily and securely obtained in a content providing terminal or the like.

### BRIEF DESCRIPTION OF THE DRAWINGS

For a better understanding of the present invention, reference will now be made by way of example to the accompanying drawings in which:
Fig. 1 is a block diagram showing a goods distribution system 1 according to a first embodiment of the present invention;
Fig. 2 is a block diagram showing the entire construction of the goods distribution system 1 shown in Fig. 1;
Fig. 3 is a plan view showing an opening screen of a store terminal used in the goods distribution system 1 shown in Fig. 1;
Fig. 4 is a plan view showing a screen displayed by selecting "MUSIC DOWNLOAD" menu on the opening screen shown in Fig. 3;
Fig. 5 is a plan view showing a screen displayed by selecting a screen displayed by selecting a music name on the MUSIC DOWNLOAD menu screen shown in Fig. 4;
Fig. 6 is a plan view showing a screen displayed by selecting "BUY" item on the screen shown in Fig. 5;
Fig. 7 is a plan view showing a screen following the screen shown in Fig. 6;
Fig. 8 is a plan view showing a screen that indicates payment in the form of comparison with the screen shown in Fig. 7;
Fig. 9 is a plan view showing a screen indicating the downloading of music;
Fig. 10 is a plan view showing a screen indicating the termination of downloading;
Fig. 11 is a plan view showing a screen displayed when successive processing has ended;
Fig. 12 is a plan view showing a screen displayed by selecting a predetermined artist name on the screen shown in Fig. 4;
Fig. 13 is a plan view illustrating selection of music in comparison with Fig. 12;
Fig. 14 is a plan view illustrating purchase of music by ID code;
Fig. 15 is a plan view showing a screen for inputting an ID code by using operating keys;
Fig. 16 is a plan view showing a screen displayed for confirmation by inputting an ID code;
Fig. 17 is a plan view showing an opening screen displayed when accessing by using a mobile phone;
Fig. 18 is a plan view showing a screen displayed by selecting "MUSIC DOWNLOAD" menu on the opening screen shown in Fig. 17;
Fig. 19 is a plan view showing a screen displayed by selecting "RECOMMENDED ARTISTS" menu on the menu screen shown in Fig. 18;
Fig. 20 is a plan view showing a screen displayed by selecting a predetermined artist name on the menu screen shown in Fig. 19;
Fig. 21 is a plan view showing an ID-code posting screen;
Fig. 22 is a flowchart showing successive processing for purchase of music by using an ID code;
Fig. 23 is a block diagram showing a goods distribution system 41 according to a third embodiment of the present invention;
Fig. 24 is a block diagram showing a goods distribution system 61 according to a fourth embodiment of the present invention; and
Fig. 25 is a flowchart showing a process for a music downloading service provided by a store terminal.

### DESCRIPTION OF THE EMBODIMENTS

With reference to the drawings, illustrative embodiments of the present invention are described below.

### 1. First Embodiment

### 1-1. Construction of First Embodiment

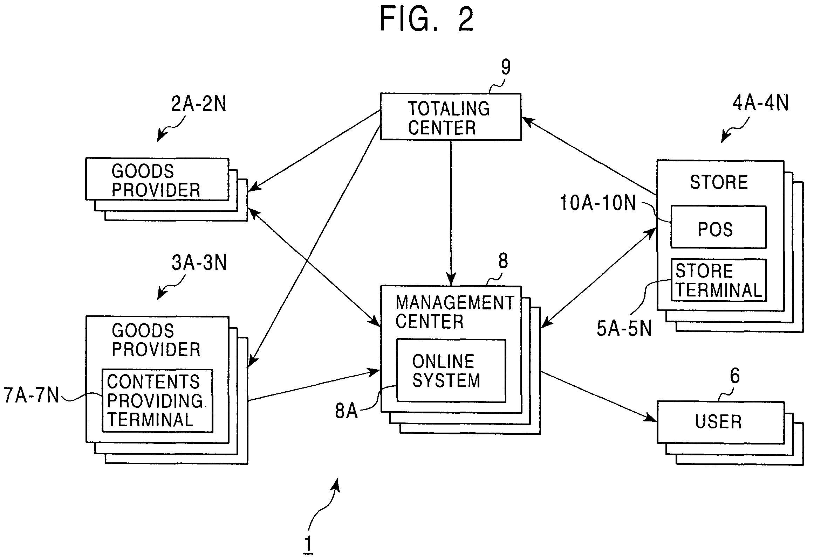

Fig. 2 is a block diagram showing a goods distribution system according to a first embodiment of the present invention. This goods distribution system 1 sells commodities of goods providers 2A to 2N, and 3A to 3N at stores 4A to 4N. The goods distribution system 1 uses store terminals 5A to 5N to provide various services in addition to the sale of commodities on display in the stores 4A to 4N, and accepts retrieval by each user 6 via the Internet about music downloading among the services by the store terminals 5A to 5N.

Specifically, in the goods distribution system 1, the goods providers 2A to 2N, and 3A to 3N are companies that use the goods distribution system 1 to provide commodities to users. Among them, the goods providers 3A to 3N (hereinafter referred to also as content providers) are companies that provide music as electronic contents. They store music files in content information terminals 7A to 7N and provide the files to a management center 8, and execute settlement processing with a totaling center 9 in accordance with sales calculated by the totaling center 9.

The goods providers 2A to 2N are companies relating to various commodities to be on display at each store for sale, and to commodities for online shopping by the store terminals 5A to 5N. They are instructed by the management center 8 to deliver commodities to a distribution centers (not shown), and deliver the commodities to the stores 4A to 4N through the distribution center. The goods providers 2A to 2N notify the management center 8 of delivery of commodities, and execute settlement processing with the totaling center 9 in accordance with delivery of commodities.

The management center 8 is a center that manages commodities distributed by the goods distribution system 1, and instructs the goods providers 2A to 2N to deliver commodities in accordance with information such as the sales of the stores 4A to 4N and predicted sales, which is posted by the totaling center 9. Also, concerning the commodities about which the instruction is given, the management center 8 instructs the distribution center to perform delivery to the stores 4A to 4N. When these commodities are directed to online shopping, the distribution center is instructed for each type of goods to perform delivery, packing, etc., for each user-designated store among the stores 4A to 4N.

Moreover, in addition to general goods-management business, the management center 8 uses the store terminals 5A to 5N to provide various services on an online system 8A, and accepts retrieval by the user via the Internet about music downloading using the store terminals 5A to 5N.

The stores 4A to 4N are convenience stores, etc. They sell commodities which are delivered by the distribution center, and use the store terminals 5A to 5N to sell commodities for online shopping with respect to each user 6. Also, information on sale by points of sale (POSs) 10A to 10N, and information on service provided to the user through store terminals 10A to 10N are posted to the totaling center 9.

The totaling center 9 executes settlement processing after performing calculation on the information from the stores 4A to 4N for each of the goods providers 2A to 2N and 3A to 3N. This calculation and predicted sales are posted to the management center 8. These allow the goods distribution system 1 to provide various commodities to the users 6 through the stores 4A to 4N.

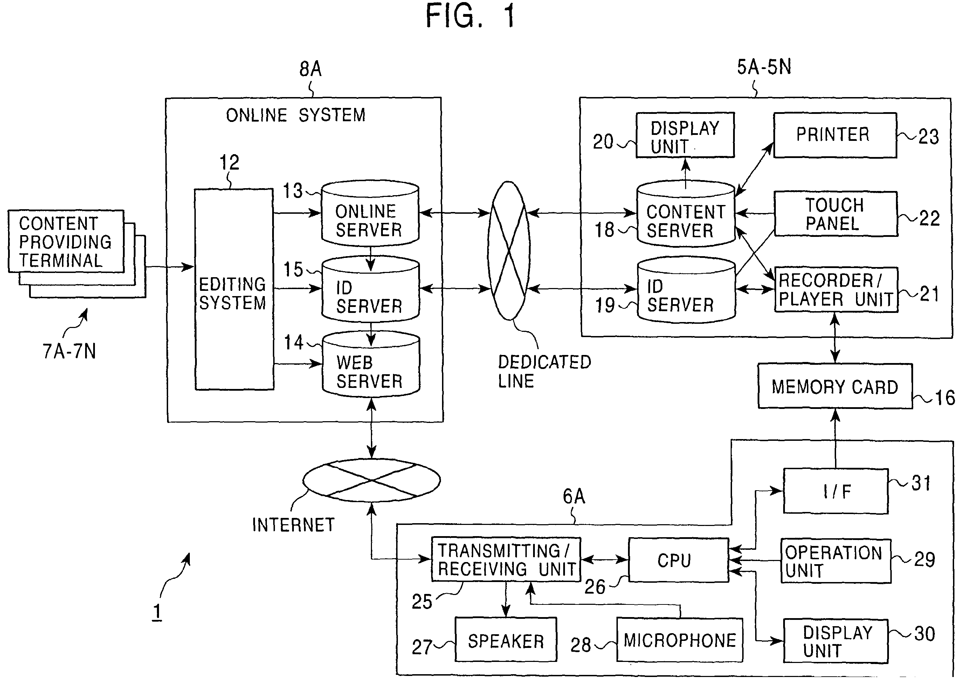

Fig. 1 is a detailed block diagram showing the goods distribution system 1 in connection with the distribution of music contents. In the goods distribution system 1, the content providing terminals 7A to 7N store music files and promotion video files which are provided by the goods distribution system 1, and periodically transmit the stored files to the online system 8A via a satellite link.

In an editing system 12, music and video files which are provided from the content providing terminals 7A to 7N are inspected and are stored in a data-compressed form. At this time, in the editing system 12, the music files are classified into genres so that desired music can easily be found by users operating the store terminals 5A to 5N, etc., and so that consumers' interest can be excited, and are stored in an online server 13, with subsidiary information such as music names and artist names. The editing system 12 performs storing the information after using a predetermined format to establish links so that the information can be sequentially provided to users in response to user operations using the store terminals 5A to 5N. This allows the online system 8A to store, in an online server 13, music contents to be provided from the store terminals 5A to 5N to the users. In addition, the editing system 12 can control the store terminals 5A to 5N to create also a graphical user interface (GUI) in accordance with operations by each operator.

Moreover, the editing system 12 converts the start of music content as part of the content which is such recorded in the online server 13 into a file (e.g., mlo file) so that the start can be played by a mobile phone 6A (so-called "i-mode mobile phone") which can access the Internet. Also, after converting the subsidiary information stored in the online server 13, such as music name and artist name, into a file in a form adapted for displaying by the mobile phone 6A, the editing system 12 records the information in a web server 14 so that the information can be found by using a classification similar to that used for storing the information in the online server 13 or by using menu selection corresponding to menu selection in the store terminals 5A to 5N.

Accordingly, in response to accessing by the mobile phone 6A via the Internet, the web server 14 can send various types of information recorded as described above.

This enables, in the goods distribution system 1, retrieval of purchasable music at the store terminals 5A to 5N by using a mobile phone which is a personal information terminal and which is linked to a line having a data transfer speed lower than that of a line serving for music downloading as described later. For that, usability by the users can be improved, and desired music can be easily purchased at the store terminals 5A to 5N.

At this time, by enabling retrieval of music using classification at the store terminals 5A to 5N, or by enabling desired music to be found similarly to the case at the store terminals 5A to 5N, user convenience can be improved and operations by the users at the store terminals 5A to 5N can be simplified.

The editing system 12 records, in an ID server 15, identification codes (ID codes) for specifying pieces of music recorded in the online server 13 in the above manner. By way of example, code "ABC-0010" is assigned to music content A corresponding to artist "AAAA" and title "TTTT", and code "ABC-00111" is assigned to music content B corresponding to artist "BBB" and title "UUUU".

When the user selects desired music by using the mobile phone 6A or the like to access the web server 14, the ID server 15 posts an ID code set in this music. In the goods distribution system 1, desired music can be specified by operations based on the ID code at the store terminals 5A to 5N. For that, usability by the users can be improved, and operations by the users at the store terminals 5A to 5N can be simplified.

In the online system 8A, in addition to the music contents, the information required for the various services to be provided by the store terminals 5A to 5N is stored in the online server 13. Necessary information is stored in the web server 14 so that, among the services, some service can be used in the mobile phone 6A or the like, and the ID code of each service is stored in the ID server 15. This can simplify, in the goods distribution system 1, user operations in the store terminals 5A to 5N also on various services other than music.

The mobile phone 6A is designed so that the memory card 16 can be loaded. When a homepage in the web server 14 is accessed and desired music is selected by the user, the mobile phone 6A acquires the ID code of the selected music by following a link which is set for the selected music and accessing the ID server 15, and records the ID code in the memory card 16. The memory card 16 is a planar recording medium accommodating a semiconductor memory. When the memory card 16 is loaded into a personal computer or the like, for example, a music file, etc., is recorded in it, and the recorded music file, etc., can be accessed. This can further simplify, in the goods distribution system 1, purchase of music at the store terminals 5A to 5N using the ID code.

In accessing by a mobile phone or the like in which it is difficult that the memory card 16 is loaded for recording, the ID code of music as acquired in such a manner is displayed by the mobile phone, whereby the displayed screen is recorded or is recorded as a memo, so that the operations required for purchase of music can be simplified by using also this type of mobile phone or the like to purchase music based on the ID code.

Specifically, in the mobile phone 6A, under the control of a central processing unit (CPU) 26, a transmitting/receiving unit 25 executes successive line-connection processing with a communication object, whereby a sound signal from the communication object is output from a speaker 27, or a user's voice acquired by a microphone 28 is sent to the communication object. Like this embodiment, when the communication object is a data-exchange object, data output from the CPU 26 is sent to the communication object, and data sent from the communication object is output to the CPU 26.

The CPU 26 forms a control means that controls the operation of the mobile phone 6A, and controls the entire operation in response to operations with an operation unit 29 such as a ten-key pad, an on-hook button, or an off-hook button. Specifically, when being instructed by the user to establish line connection, the CPU 26 controls the transceiver 25 to execute line-connection processing. At this time, when being instructed by the user to connect to the Internet, it connects to a predetermined provider and uses a user-designated uniform resource locator (URL) to access a homepage. Also, a display unit 40 is used to provide a user interface necessary for the successive connection processing, and when connection to the homepage is established, various types of data provided by the homepage are displayed on the display unit 40. The display unit 30 is formed by, for example, a liquid-crystal display panel, and displays the various types of information provided via the Internet. This enables the mobile phone 6A to recognize various types of information recorded in the above web server 14.

When the data provided as described above from the homepage is a file such as moving picture file or music file, decoding processing is executed to activate the display unit 30 or the speaker 27, whereby the start of music recorded in the web server 14, etc., can be recognized. When the user operates the operation unit 29 to designate recording to the memory card 16 of the data provided from the homepage in the above manner, data that is obtained from the homepage via an interface 31 is recorded in the memory card 16. This enables the mobile phone 6A to record the ID code of the desired music to the memory card 16.

The store terminals 5A to 5N are computers which are formed similarly in shape to automatic teller machines for banks, etc., and into which the memory card 16 can be loaded, and are connected to the online system 8A of the management center 8 via a dedicated line having a transmission speed higher than that of a link for the mobile phone 6A. The store terminals 5A to 5N periodically download records in the online server 13 into each built-in hard disk drive. This forms a content server 18 for each music content for service. The store terminals 5A to 5N simultaneously download an ID code corresponding to each music content from the ID server 15 of the online system 8A, whereby an ID server 19 is formed. The store terminals 5A to 5N download, from the online system 8A, information for service other than the music and ID codes set for various services, and stores these in the hard disk drives.

The store terminals 5A to 5N displays, on a display unit 20, various menus based on various types of information recorded in the hard disk drive. A touch panel 22 is used to detect a menu selected by the user, and a screen displayed on the display unit 20 is switched based on the detection result. Also, services selected by the user are provided. Concerning the provided services, an accounting processing mechanism (not shown), charges the user and notifies the totaling center 9. Among the provided services, when the downloading of music is selected by the user, in response to a user's operation, the user is instructed to load the memory card 16, and a music file selected by the user is downloaded into the memory card 16, based on an ID code recorded in the memory card 16. When a service such as the sale of tickets is provided, a printer 23 is driven to print tickets.

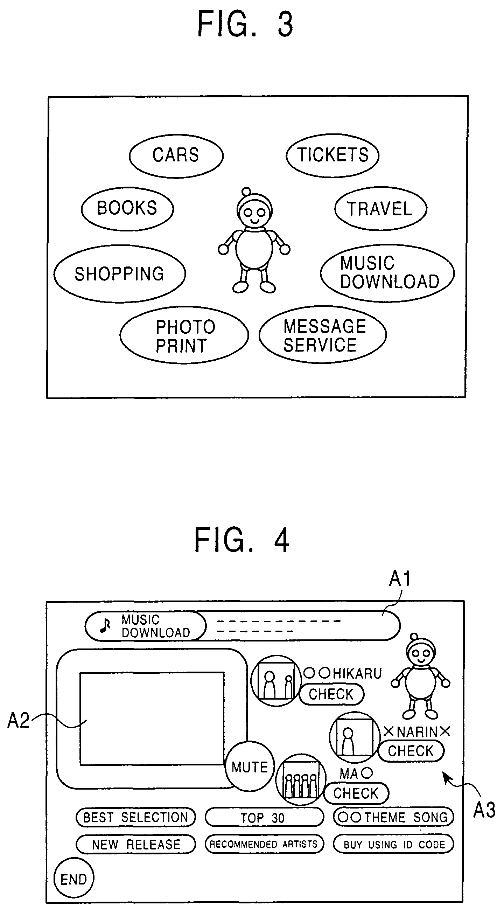

Fig. 3 is a plan view showing an opening screen displayed as described above at each of the store terminals 5A to 5N. On this opening screen, in the screen center, a mascot character for the goods distribution system 1 is displayed and around this, car, book, shopping, photo print, message service, music download, and ticket menus are displayed.

Here, the car menu is used to open menu screens of various car-related services. In the goods distribution system 1, by selecting from the various car-related menus, applications for an official automobile inspection and a rental car, retrieval and sale of a new car and a used car, an application for a driving school, retrieval and sale of car goods, an introduction of car hobbies can be selected. The book menu is for online shopping of books. In the goods distribution system 1, after selecting this menu, a book designated by the user is accepted, and the management center 8 controls the goods providers 2A to 2N to make preparations. '

The shopping menu is a menu for online shopping of commodities belonging to classifications other than cars and books. When this menu is selected, the store terminals 5A to 5N display by the genre a plurality of types of commodities that are not displayed at the stores, and accepts selections made by the users. Also in this case, in the goods distribution system 1, the management center 8A controls the goods providers 2A to 2N to prepare commodities the accepted selection of the commodities.

The photo print menu is a menu of a service for printing recordings made by electronic still cameras. When this menu is selected by a user, the store terminals 5A to 5N each prompt the user to connect a recording medium of an electronic still camera, and online transfer the data of the recording medium to a predetermined print service center. In the goods distribution system 1, the data transferred to the print service center is used to make prints, and later, under control of the management center 8, the prints are delivered to the stores 4A to 4N and are handed to the user.

The message service menu is used to select a message service by the goods distribution system 1. In the goods distribution system 1, this message service enables each of the store terminals 5A to 5N to be used as a bulletin board.

The travel menu is used to open a menu of a service concerning travel, leisure, etc. In the goods distribution system 1, after selecting this menu, applications for various package tours, reservations for hotels, orders for leisure goods, etc., can be accepted.

The ticket menu is used to apply for admission tickets for concerts, events, etc. When this menu is selected, the store terminals 5A to 5N connect to a ticket management center via the management center 8, so that user-desired tickets can be reserved and purchase of the reserved tickets can be performed.

The music download is used to purchase music provided by the content providers 3A to 3N. This enables the store terminals 5A to 5N to be used for various purposes other than purchase of music. For that, if purchase of music takes time at the store terminals 5A to 5N, opportunities of developing various services is greatly lost.

Fig. 4 is a plan view showing a screen displayed when the music download menu is selected on the opening screen by a user. On this displayed screen, in a top display area A1, a music download title and a message for stimulating user's desire of purchase are displayed. Below this representation, in a left display area A2, promotion videos provided by the content providers 3A to 3N are displayed at random. In the store terminals 5A to 5N, the music files of the promotion videos are played by a player means (not shown) and are output from a speaker. By operating a mute item disposed in the center of the screen, the speaker output can be muted. On the displayed screen, in a display area A3 on the right of the promotion video display, a still image of an artist of recommended music, an artist name, and a check item are displayed. Below these displayed, items, namely, "BEST SELECTION", "TOP 30", "PREDETERMINED THEME SONG", "NEW RELEASE", "RECOMMENDED ARTIST", and "BUY WITH ID CODE" are displayed, and an END item is displayed.

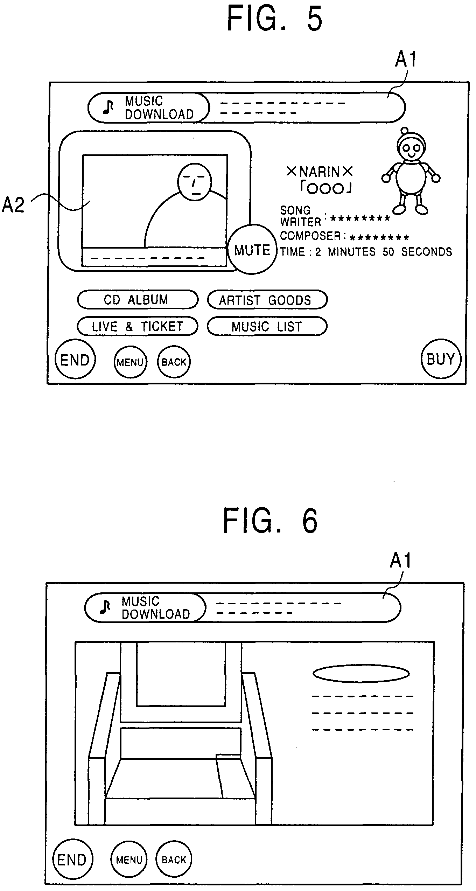

In each of the store terminals 5A to 5N, in the display area A2 concerning the recommended music, a corresponding recommended-music introduction screen is displayed, as shown in Fig. 5. In each of the store terminals 5A to 5N, when the BEST SELECTION item is selected on the displayed screen shown in Fig. 4, a list of recommended pieces of music is displayed with a promotion video, and also when desired music is selected by the user, switching to the screen shown in Fig. 5 is performed. On the introduction screen, similarly to the displayed screen in Fig. 4, in a top display area A1, a music download title and a message for stimulating user's desire of purchase are displayed. In a display area A2 for a promotion video, a promotion video of user-selected music is displayed, and a description of the music is displayed in the form of a television opaque projection along the bottom of the display area A2. In the store terminals 5A to 5N, also on this displayed screen, the music file of the promotion video is played by the player means and is output from the speaker. By operating a mute item disposed in the center of the screen, the speaker output can be muted.

In addition, on this displayed screen, an artist name, a music name, a songwriter, a composer, and a time are displayed with the MUTE item provided therebetween. Below these items, "CD ALBUM", "ARTIST GOODS", "LIVE&TICKET", "MUSIC LIST", and purchase menus are displayed. Below these menus, "END", "MENU", "BACK", and "BUY" items are displayed.

In the store terminals 5A to 5N, when the CD ALBUM menu is selected by the user, a list of albums by the artist is displayed instead of the representation of the artist name and music name, and the display area A2 for the promotion video is switched to a corresponding representation so that album-unit download selection is accepted. Also, when the ARTIST GOODS menu is selected, a list of goods related to the artist is displayed instead of the representation of the artist name, the music name, etc. When the LIVE&TICKET menu is selected, a list of scheduled concerts of the artist is displayed instead of the representation of the artist name, the music name, etc., and when a desired concert is selected from the displayed list by the user, the displayed screen is switched to a ticket purchase screen, similarly to the case in which a concert is selected by selecting the TICKET menu on the opening screen. Also, when the music list is displayed, concerning the artist of the user-selected music, a list of pieces of music recorded in the store terminals 5A to 5N is displayed, and on the displayed list, designation of user-desired music is accepted. When the END item is selected, the displayed screen is switched to the music download menu screen (Fig. 4), and selection of the BACK item switches the displayed screen to the last screen.

When the BUY item is selected, purchase by the user of the user-selected music is accepted, and the displayed screen is switched to a screen for successive processing of purchase. When the user selects the BUY item after selecting from the CD ALBUM menu and selects an album, or when the user selects the BUY item after selecting from the MUSIC LIST and selects some recorded music, the displayed screen is similarly switched in the store terminals 5A to 5N.

Fig. 6 is a plan view showing a displayed screen displayed, as described above, using the purchase menu. On the displayed screen, in a top display area A1, a music download title and a message instructing the user to perform an operation are displayed. Below this representation, a front image of each of the store terminals 5A to 5N is displayed, and a message to the user on operation is displayed. At the bottom, similarly to the last screen, END, MENU, and BACK items are displayed. In the store terminals 5A to 5N, when these items are selected, the displayed screen is switched to the last screen. When the user loads the memory card 16 into a predetermined loading position, the displayed screen is switched to the successive processing screen.

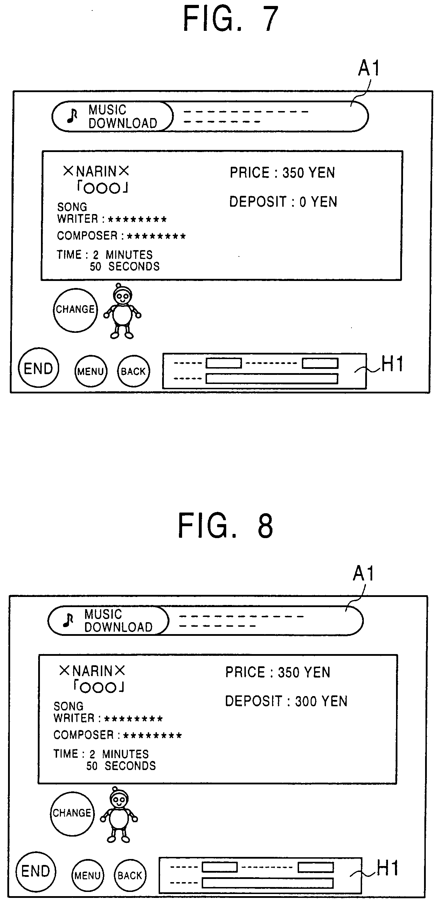

Fig. 7 is a plan view showing the successive processing screen. On this displayed screen, in a top display area A1, a music download title and a message instructing the user to perform an operation are displayed. Below the representation, on the left, a name of music to be purchased, an artist name, etc., are displayed, and on the right, the price required for purchase is displayed. Below the price, a display section for a deposit from the user is formed. In the store terminals 5A to 5N, when bank notes and coins are put from a predetermined slot, the deposited amount of money is displayed in the display section, as Fig. 8 shows a money-deposited state in a form of comparison with Fig. 7. On this displayed screen, at the bottom, "END", "MENU", and "BACK" items are displayed similarly to the last screen, and when these items are selected, the displayed screen is switched in the store terminals 5A to 5N, similarly to the case of the last screen. When "CHANGE" item is displayed, and the CHANGE item is selected, the user-selected music is displayed with other selectable pieces of music, and a change by the user is accepted. Also, a representation H1 that indicates the process of the downloading is displayed.

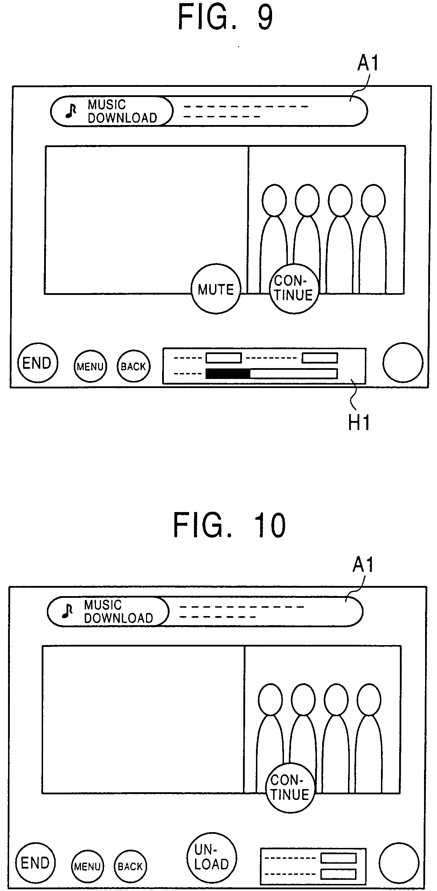

When accepting the payment of the purchased amount from the user, in the store terminals 5A to 5N, downloading processing is initiated and the displayed screen is switched to the screen shown in Fig. 9. Here, on this displayed screen, in a top display area A1, a music download title and a predetermined message are displayed. A promotion video of other recommended music and an album cover are displayed. Also, "MUTE" and "CONTINUE" items are displayed. When the MUTE item is displayed, a speaker output of the promotion video is muted, and when the CONTINUE item is selected, returning to the menu screen (Fig. 4) is performed and successive selection of music is accepted.

When the downloading ends, the displayed screen shown in Fig. 10 is displayed. On this displayed screen, in a top display area A1, a music download title and a predetermined message are displayed and a guidance representing the end of the downloading is displayed with a predetermined still image. When from among displayed CONTINUE, MENU, UNLOAD, etc., each of the CONTINUE and MENU is selected, the displayed screen is switched similarly to the above-described case, and when the UNLOAD item is selected, a predetermined lock mechanism is released so that the memory card 16 can be unloaded.

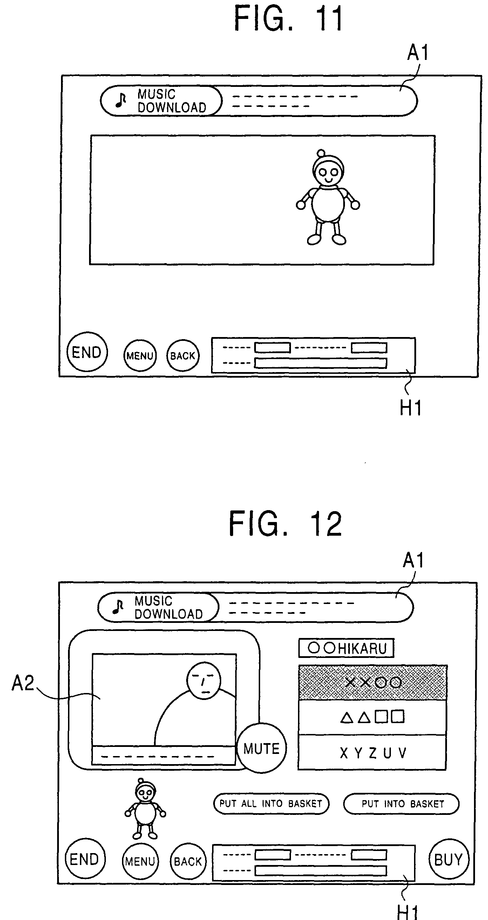

Fig. 11 is a plan view showing a displayed screen in a case in which the memory card 16 has been unloaded as described above. On the displayed screen, with a title and a message, a predetermined animation using a mascot character image is displayed, and when this animation ends, the displayed screen is switched to the opening screen in the store terminals 5A to 5N. These enable the store terminals 5A to 5N to provide each user with recommended music and albums so that user-desired music can be easily and rapidly purchased.

When in response to the selection by the user, the artist name is selected in the display area A3 on the displayed screen shown in Fig. 4, the displayed screen shown in Fig. 12 is displayed in the store terminals 5A to 5N. When the RECOMMENDED ARTISTS menu is selected on the displayed screen shown in Fig. 4, in the store terminals 5A to 5N, the list of artist names is displayed. When the user selects a desired artist name on the displayed list, the displayed screen shown in Fig. 12 is also displayed and selection by the user is accepted.

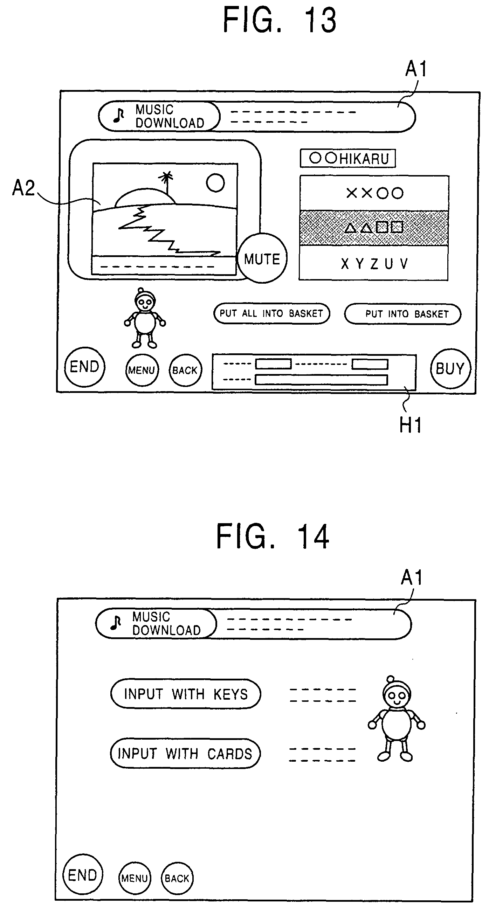

On the displayed screen shown in Fig. 12, in a top display area A1, a music download title and a predetermined message are displayed. Concerning the promotion video and the user-selected artist, a list of pieces of music recorded in the store terminals 5A to 5N is displayed in the form of buttons. In the representation of the buttons, buttons corresponding to the promotion video and the played music file are displayed in different colors and in pressed form. As Fig. 13 shows in a form of comparison with Fig. 12, in each of the store terminals 5A to 5N, the representations of the promotion video, the music file to be played, and the buttons are switched by selecting the buttons, whereby the user can recognize the recommended pieces of music. In addition, on the displayed screen, "PUT ALL TO BASKET" and "PUT INTO BASKET" items are displayed. When the PUT ALL TO BASKET item is selected, all the displayed listed pieces of music are treated as objects of purchase, and when the PUT INTO BASKET item is selected, music being played is treated as an object of purchase.

On the displayed screen, END, MENU, and BACK items are displayed and a representation H1 that indicates the process of the downloading is displayed. On the bottom right, "BUY" item is selected, and by selecting this item, purchase by the user about objects of purchase put in the basket is accepted, and the displayed screen is switched to a screen for successive processing of purchase. Accordingly, in the store terminals 5A to 5N, from the recommended artist, user-desired music can be easily and rapidly selected.

Specifically, when the BUY item is selected, in the store terminals 5A to 5N, the displayed screen shown in Fig. 13 or Fig. 12 is switched to the displayed screen described using Fig. 6, and the loading of the memory card 16 is prompted. Successively, by displaying the displayed screens in Figs. 7 and 8, the user is prompted to make a payment. When the CHANGE item is selected, the displayed screen is switched to the displayed screen in Fig. 12 or Fig. 13. After the above successive processing, when the payment processing is executed by the user, the displayed screen shown in Fig. 9 and the downloading processing is initiated. On completion of the downloading, the displayed screens shown in Figs. 10 and 11 are sequentially displayed.

Also, when in the display area A3 on the displayed screen shown in Fig. 4, each "NEW RELEASE" or "TOP 30" menu is selected, similarly to the case in which the RECOMMENDED ARTISTS menu is selected, a promotion video or a corresponding list of pieces of music is displayed, and after accepting selection by the user, the downloading processing is executed similarly to the above case. This makes it possible in this embodiment to use various classifications to retrieve music desired by the user, and for that, the desired music can be easily and rapidly found. Nevertheless, in a system of this type, there is a possibility that the desired music cannot be found in the above manner, and there is also a possibility that the desired music is not recorded.

Accordingly, when the ID code has been obtained with the mobile phone 6A, as described above, by selecting the BUY WITH ID CODE menu shown on the displayed screen in Fig. 4 in the store terminals 5A to 5N, music retrieved by the user beforehand can be easily and rapidly purchased.

Fig. 14 is plan view showing a displayed screen in a case in which the BUY WITH ID CODE menu is selected. On this displayed screen, in a top display area A1, a music download title and a predetermined message are displayed, and "INPUT WITH KEYS" and "INPUT WITH CARD" menus are subsequently displayed with a selection-prompting message. Below these, END, MENU, and BACK items are displayed. When the END and other menus are selected, the displayed screen is switched similarly to the above case.

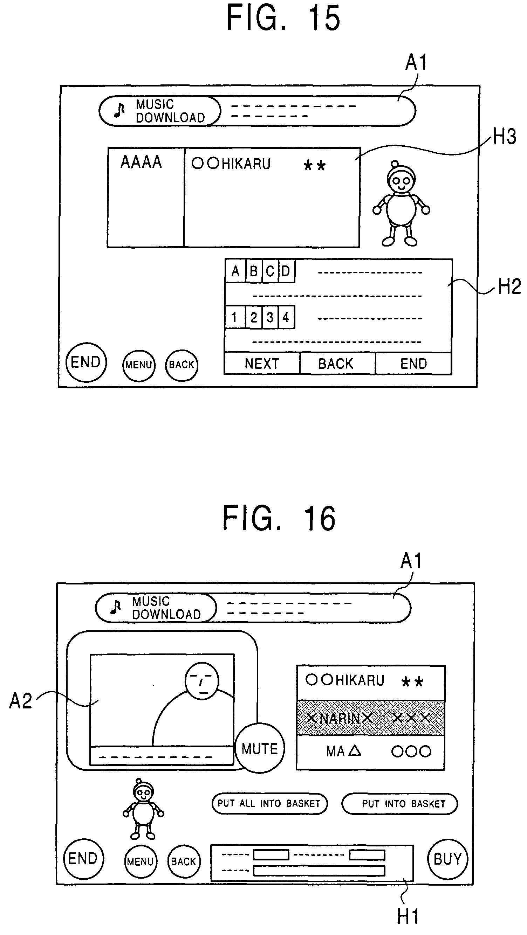

When the INPUT WITH KEYS menu is selected as a response, the displayed screen is switched to the displayed screen shown in Fig. 15 in the store terminals 5A to 5N. On this displayed screen, in a top display area A1, a music download title and a predetermined message are displayed, and a section for displaying an ID code, the artist name of corresponding music, and a music name is displayed. An input-with-key section H2 which has a section for selecting from NEXT, BACK, and END items, and an alphanumerical input section is displayed. Below this, END, MENU, and BACK items are displayed.

When the user operatively presses the input-with-key section H2, the operatively pressed alphabets and numerals are displayed in the ID-code display section H3 in the store terminals 5A to 5N. When the user selects the NEXT or END item, the ID code acquired as described above is used to access the ID server 19, and the corresponding music name and artist name are retrieved and displayed in the display section H2. In this case, when the NEXT item is operated in the input-with-key section H2, input of the successive ID code is accepted. This allows the store terminals 5A to 5N to accept input of an ID code obtained by accessing the web server 14 with the mobile phone and making a memo or the like and to display the corresponding music and the artist name so as to prompt recognition by the user. When the BACK item is selected in the input-with-key section H2, the store terminals 5A to 5N each accept correction of the input ID code.

When the END item is selected in the input-with-key section H2, after correction by the user of the ID code is accepted for a predetermined time by displaying this screen, this screen is switched to the displayed screen shown in Fig. 16. In a top display area A1, a music download title and a predetermined message are displayed. Also, music names and artist names corresponding to the ID code in Fig. 15 are displayed in the form of a list so as to have button shapes. These are displayed in different colors, with one button of these pressed. Concerning music displayed on the pressed button, a promotion video is displayed and a music file is played. In the store terminals 5A to 5N, selection of the buttons switches the representations of promotion videos, music files to be played, and the buttons.

On the displayed screen, "PUT ALL TO BASKET" and "PUT INTO BASKET" items are displayed. When the PUT ALL TO BASKET item is selected, all the displayed listed pieces of music are treated as objects of purchase, and when the PUT INTO BASKET item is selected, music being played is treated as an object of purchase. On the displayed screen, "END", "MENU", and "BACK" items are displayed and a representation H1 that indicates the process of the downloading is displayed. On the bottom right, "BUY" item is selected, and by selecting this item, purchase by the user about objects of purchase put in the basket is accepted, and the displayed screen is switched to a screen for successive processing of purchase. Accordingly, in the store terminals 5A to 5N, from the recommended artist, user-desired music can be easily and rapidly selected.

This allows the store terminals 5A to 5N to prompt each user to recognize the ID code input by the user, so that, for example, when a memo is mistakenly made, mispurchase can be prevented. When such an error is detected, by operating the MENU and BACK items, originally desired music can be selected again. In a case in which the originally desired music is retrieved again as described above, it is possible that the desired music can be detected in a relatively short time because retrieval by mobile phone has been made once.

Accordingly, recognition by the user of the music is obtained in the above manner. When the BUY item is selected, the store terminals 5A to 5N each perform the successive processing described using Fig. 6 to Fig. 11, whereby the music specified by the ID code is downloaded into the memory card 16, as described above.

Also, when the INPUT WITH CARD menu is selected, the store terminals 5A to 5N each prompt the user to load the memory card 16 by displaying the displayed screen shown in Fig. 6. When the loading of the memory card 16 is detected, a recorder/player unit 21 is driven to access the memory card 16, and the ID code recorded in the memory card 16 is detected. The store terminals 5A to 5N each use the detected ID code to access the ID server 19 and the content server 18, and display the screen in Fig. 16. Accordingly, in this case, by directly detecting the ID code recorded in the memory card 16, and displaying the corresponding music names and artist names, the obtained simplified operation and effective avoidance of misinput make it possible to recognize the music desired by the user. Accordingly, when in the store terminals 5A to 5N, recognition by the user is obtained after displaying the music names, etc., which correspond to the ID code, selection of the BUY item executes the downloading processing, similarly to the case in which the INPUT WITH KEYS menu is selected.

Also, when the TICKET menu is selected on the opening screen, the store terminals 5A to 5N use classifications by the genre to accept retrieval of tickets for an event and transportation, similarly to the above music downloading case, and drive the printer 23 to sell tickets in response to payment by the user of the price. At this time, similarly to the music downloading case, the store terminals 5A to 5N accept an ID code input using the memory card 16 or operation with keys. By using this ID code, a corresponding ticket retrieved beforehand by the user is sold to the user.

Also, when the TRAVEL menu is selected, similarly to the music downloading case, the store terminals 5A to 5N each use various genre classifications to introduce package tours, etc., and accept retrieval by the user. They also accept an application for a tour which is made in an input-by-key form, etc. In response to payment by the user of the price, the printer 23 is driven to sell detailed guidance such as meeting place in the package tours, tickets, etc. At this time, similarly to the music downloading case, the store terminals 5A to 5N each accept an ID code input by using the memory card 16 or key operation in accordance with user's selection, and sell to the user a ticket of the tour, which has been retrieved based on the ID code by the user.

Also, when the user who uses the TRAVEL menu selects travel goods, or the user selects desired goods from the "BOOKS", "SHOPPING", and "CARS" menus, a coupon is issued in response to payment by the user of the price. Therefore, in the goods distribution system 1, the goods is later delivered to the stores 4A to 4N in which the store terminals 5A to 5N are installed, and the goods is handed in exchange of the coupon.

When the PHOTO PRINT menu is selected, the user is prompted to load the memory card 16, and selection of still images recorded in the memory card 16 is accepted. The store terminals 5A to 5N each calculate a price based on the selection, and upload, to a predetermined print center, the data of the still images in response to payment of the price. The print center is driven to issue a coupon. This also makes it possible in the goods distribution system 1 to hand prints later in exchange of the coupon.

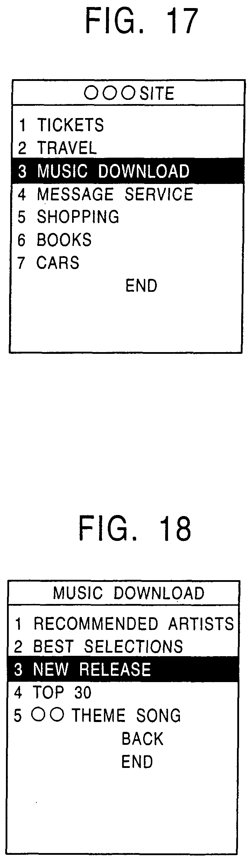

Fig. 17 is a plan view showing a displayed screen of the mobile phone 6A which corresponds to the opening screen (Fig. 3) of the store terminals 5A to 5N. In the web server 14, various types of data are recorded so that among services provided by the store terminals 5A to 5N, services identical to those selectable in the store terminals 5A to 5N can be selected, excluding services that cannot be provided by the mobile phone 6A. In other words, on this opening screen, menus identical to those on the above opening screen are displayed, excluding the PHOTO PRINT menu.

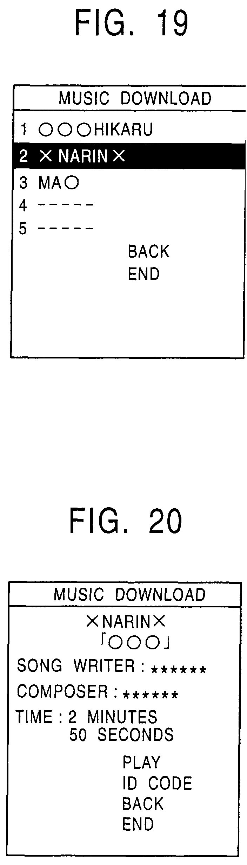

By using the mobile phone 6A to select this menu and following a link thereon, the displayed screen is switched similarly to a case in which a corresponding menu is selected on the opening screen of each of the store terminals 5A to 5N. Fig. 18 is a plan view showing a displayed screen obtained when "MUSIC DOWNLOAD" menu is selected. In this case, menus such as "RECOMMENDED ARTISTS" are displayed which correspond to the corresponding menus on the screen (Fig. 4) of the store terminals 5A to 5N. On the menu screen shown in Fig. 18, selection of the RECOMMENDED ARTISTS menu displays a list of recommended artists, as shown in Fig. 19. Selection of a desired artist on this screen displays a list of pieces of music recorded in the store terminals 5A to 5N in connection with the artist selected by the user.

When the user selects the desired music on the displayed list, details of the music which correspond to the displayed screen described using Fig. 5 are displayed as shown in Fig. 20, and "PLAY", "BACK", and "END" items are displayed. Here, when the PLAY item is displayed, the web server 14 is accessed by following a link on the PLAY item, whereby in the mobile phone 6A, the file corresponding to the start of music is downloaded, and is decoded and played. This enables the user to use the mobile phone 6A as a familiar personal information terminal device to recognize music to be purchased, similarly to the operation of each of the store terminals 5A to 5N.

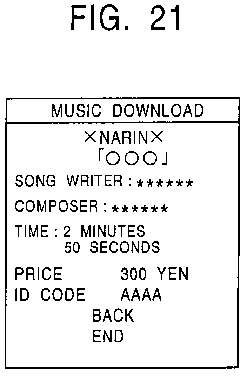

When the ID code menu is selected, similar accessing is performed, whereby the data of corresponding ID code and the money required for purchase is transmitted from the ID server 15, so that the ID code is displayed with details of music and the money for purchase, as shown in Fig. 21. Therefore, in the mobile phone 6A having a function of recording such an ID code in the memory card 16, by operating a predetermined operation unit 29, the ID code is recorded in the memory card 16 and desired music can be easily and rapidly downloaded to each of the store terminals 5A to 5N. Conversely, in devices such as a mobile phone that does not have a function of recording to the memory card 16, a mobile phone into which a memory card cannot be loaded, and a personal computer, by recording the posted ID code in the form of a memo or the like, and inputting the ID code, desired music can be easily and securely obtained in the store terminals 5A to 5N.

Accordingly, the web server 14 forms, for electronic contents retained in the content server 18, a retrieval data retaining means that holds retrieval data for the electronic contents, and the ID server 15 forms, for an electronic content retrieved using the retrieval data, an identification-code issuance means that issues an identification code for specifying the electronic content. Also, in the store terminals 5A to 5N, the touch panel 22 forms an identification code input means that manually inputs the identification code issued as described above, and the recorder/player unit 21 forms an identification code input means that inputs an identification code from the memory card 16.

Also, when on the opening screen of the mobile phone the TICKET menu is selected, and when the TRAVEL menu is selected, by forming a displayed screen so that services are sequentially retrieved using classifications similar to those used in the store terminals 5A to 5N, selection by the user is accepted. When a use applies for purchase of a ticket, an ID code is issued. This makes it possible in the goods distribution system 1 to purchase tradable electronic contents in the store terminals 5A to 5N by using the ID code, even in various services other than music.

Also, by forming a displayed screen so that sequential retrieval in also the TRAVEL GOODS, BOOK, SHOPPING, and CAR menus can be performed using classifications similar to those used in the store terminals 5A to 5N, selection by the user is accepted, and the reference number of a coupon is posted in response to an indication of the user's intention of purchase. This makes it possible for the user in the goods distribution system 1 to obtain purchased goods prepared by the management center 8 by later visiting a store, and informing a salesperson of the reference number and making a payment.

Accordingly, in this embodiment, the transmitting/receiving unit 25 and the CPU 26 which constitute the mobile phone 6A form an access means that, by accessing retrieval data for retrieving electronic contents recorded in the web server 14, specifies a desired electronic content and acquires an ID code specifying the electronic content. In addition, the interface 31 forms a recording means that records the ID code so that by using the ID code to specify an electronic content, the store terminals 5A to 5N can be accessed.

### 1-2. Operation of First Embodiment

In the above construction, in the goods distribution system 1 (Fig. 2), goods provided by the goods providers 2A to 2N and 3A to 3N are delivered to the stores 4A to 4N by the management center 8, and are sold to each user 6 by the stores 4A to 4N. The sales results are totaled by the totaling center 9, and based on the total, predicted sales, etc., goods are ordered from the goods providers 2A to 2N and 3A to 3N. In accordance with delivery of goods, settlement processing is executed with respect to the goods providers 2A to 2N and 3A to 3N via the totaling center 9, and settlement is executed with respect to similar stores 4A to 4N.

In this distribution of goods, concerning music (Fig. 2) as an electronic content, accompanying information, such as music file, promotion video, and artist name, are provided from each of the content providing terminals 7A to 7N to the online system 8A of the management center 8, and the editing system 12 of the management center 8 performs data compression on the music file and the promotion video file. Also, editing processing on the files is performed so that facilitated retrieval can be performed in each of the store terminals 5A to 5N of the stores 4A to 4N and that intention of purchase is stimulated, and are stored in the online server 13.

In the editing system 12, links are formed on data such as artist names so as to relate to retrieval in the store terminals 5A to 5N, and the data is recorded in the web server 14. Also, music files are created so that the start of music to be provided by the store terminals 5A to 5N can be recognized, and are recorded in the web server 14. ID codes are recorded in the ID server 15 so that pieces of music to be provided by the store terminals 5A to 5N can be specified and correspond to the information recorded in the web server 14.

In the goods distribution system 1, the music files, etc., which are recorded in the online server 13, are periodically downloaded to the store terminals 5A to 5N via a high speed line, so that in the store terminals 5A to 5N, by selecting a menu on the displayed screen, desired music is retrieved, and is further downloaded to the memory card 16 (Figs. 3 to 13). At this time, by providing pieces of music to be provided to the user in a form in which the pieces are classified into genres or the like, music desired by the user can be easily and rapidly retrieved, and this can reduce the loss of valuable opportunities of sale.

Also, when the mobile phone 6A is used to access the homepage of the goods distribution system 1, by using operations similar to those in the store terminals 5A to 5N, the music files recorded in the web server 14 are sequentially provided (Figs. 17 to 20) through links, and this makes it possible to verify whether or not desired music can be downloaded by using the mobile phone 6A, with which the user is familiar as a portable information device, and the money required for purchase. Accordingly, the user can confirm cases in which purchase is difficult and in which the money for purchase does not meet hope, so that so-called useless action of the user can be prevented. Each store can assign such useless time of operations by the user of the store terminals 5A to 5N to advertisement and sale to other users, etc. For that, the loss of valuable opportunities of sale can be reduced. Each user can retrieve desired music at various places by operating the mobile phone 6A, and for that, the usability of the goods distribution system 1 can be improved.

When the desired music has been retrieved using the mobile phone 6A, in the goods distribution system 1, an ID code for specifying the music is posted from the ID code server 15 to the mobile phone 6A (Fig. 21), whereby this ID code can be recorded in the memory card 16 or can be recorded in the form of a memo and by a mobile phone.

This enables each user to visit the store terminals 5A to 5N and to specify the desired music based on the ID code, so that the desired music can be easily and rapidly detected. Accordingly, at each store, the turnover factors of the store terminals 5A to 5N can be increased, so that the loss of opportunities of sale can be reduced.

In particular, in the store terminals 5A to 5N, the menu is set as described above so that corresponding music can be detected based on the ID code (Fig. 14 to Fig. 16), and not only in a case in which the ID code is recorded in the memory card 16, but also in a case in which the ID code is recorded in the form of a memo or the like, the ID code can be input by operating keys. This makes it possible to execute, base on the ID code, retrieval of goods in the store terminals 5A to 5N in a time extremely shorter than conventional. For that, the loss of opportunities in a store can be reduced. For the user, usability can be improved.

In the goods distribution system 1, also in such downloading of music based on the ID code, the user can be prompted to perform confirmation, a change can be accepted, and these can cope with a case in which the user changes its mind, whereby usability of the user can be improved. In addition, even when music is downloaded based on an ID code, the addition of pieces of music by the user is accepted. Accordingly, also opportunities of sale can be increased.

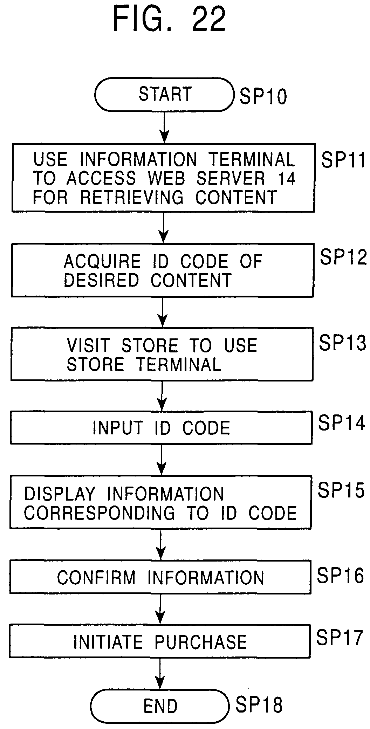

The entire process in the above case in which the ID code is used to purchase music is summarized. In the goods distribution system 1, as shown in Fig. 22, the process proceeds from step SP10 to step SP11, initially, the user uses the mobile phone 6A as his or her own information terminal to access the web server 14 so that a content is retrieved, and in the subsequent step SP12, the ID code of a desired content is acquired. In the subsequent step SP13, the user visits a store and initiates the operation of a store terminal, and inputs an ID code in step SP14. In the subsequent step SP15, music based on the ID code is displayed to user, and is confirmed by the user in step SP16. In the goods distribution system 1, the confirmation completes the process in step SP17 after the operation of purchase of music is initiated in step SP17.

The goods distribution system 1 is designed so that the store terminals 5A to 5N and mobile phones can purchase electronically tradable electronic contents such as tickets, large goods which cannot be displayed in stores, cars which are goods in which the number of sales is small, books, etc., other than the above music. In this case, when the mobile phone 6 is used to retrieve an electronic content, a corresponding content and an ID code which specifies a service are issued, and similarly to the music downloading case, printed results of tickets, etc., which are contents of the store terminals 5A to 5N, can be received based on the ID code. Therefore, in the goods distribution system 1, concerning such service, retrieval can be performed with a portable device familiar to the user, whereby usability for the user can be further improved and the loss of opportunities in the store terminals 5A to 5N, which is caused by user's taking time in use of the service, can be prevented.

### 1-3. Advantages of First Embodiment

According to the above construction, by posting an ID code which is an identification code capable of specifying a content corresponding to retrieval of content and which is used in provision of content, a desired content can be securely obtained in a short time in the operation of a store terminal at a store. Accordingly, the loss of opportunities of sale in the store terminal can be reduced, and usability for the user can be improved.

### 2. Second Embodiment

In this embodiment, by using self-service stores in which so-called "vending machines" are only installed, a goods distribution system similar to the above-described first embodiment is formed. Accordingly, in each store, not only electronic contents, but also goods displayed for sale in ordinary stores are sold by vending machine.

In this goods distribution system, concerning such goods for the vending machines, other than the electronic contents according to the first embodiment, an ID code is issued after performing retrieval using the Internet, and in each vending machine, a type of goods can be selected by using an ID code recorded in a memory card or using an ID code formed by using operating keys.

By posting an ID code so that not only retrieval of electronic contents but also separate retrieval of physical goods can be performed, each store can securely obtain desired goods in a short time, this can also reduce the loss of opportunities in the sale of goods, advertisement of goods, etc., and can improve usability for the user.

### 3. Third Embodiment

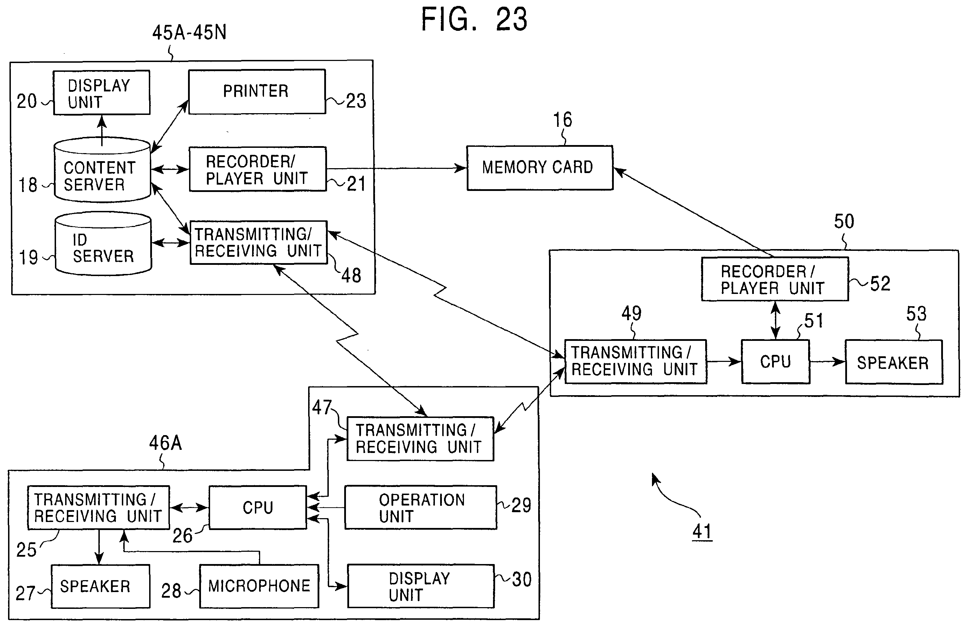

Fig. 23 is a block diagram showing part of a goods distribution system 41 according to a third embodiment of the present invention. This goods distribution system 41 is identical in structure to the goods distribution system 1 (Fig. 1) according to the first embodiment, excluding differences in ID code processing. Accordingly, in Fig. 23, by using corresponding reference numerals to denote components identical to those in Fig. 1, a repeated description is omitted.

In this embodiment, a mobile phone 46A includes a transmitting/receiving unit 46 that performs wireless communication such as Bluetooth or infrared optical communication, and can transmit, by using the transmitting/receiving unit 46, an ID code directly to store terminals 45A to 45N each having a corresponding transmitting/receiving unit 48. Accordingly, in this embodiment, the transmitting/receiving unit 48 forms an ID code input means, and can input an ID code by wireless communication or optical communication.

By using the transmitting/receiving unit 47, the mobile phone 46A can transmit an ID code to a player apparatus 50 including a corresponding transmitting/receiving unit 49.

The player apparatus 50 is specifically a portable music player apparatus, and drives a recorder/player unit 52 by using a CPU 51 so that a music file recorded in the memory card 16 is played and output from a speaker 53. When being notified of an ID code by the mobile phone 62, the player apparatus 50 records the ID code. In response to operations by the user, the player apparatus 50 posts the ID code directly to the store terminals 45A to 45N via the transmitting/receiving unit 49, or notifies the store terminals 45A to 45N of the ID code by recording the ID code in the memory card 16.

Accordingly, in this embodiment, by using the player apparatus 50 as an apparatus that uses such electronic contents, the ID code can be posted to the store terminals 45A to 45N. Therefore, also when performing downloading to various recording media other than the memory card 16, the ID code can be easily input, similarly to a case in which downloading is performed to the memory card 16.

In response to selective operations by the user, the player apparatus 50 performs, by using the CPU 51 to execute a predetermined process, remote control of the mobile phone 46A via the transmitting/receiving unit 49, whereby the mobile phone 46A is used simply as a relay device and the web server 14 and the ID server 15 are directly accessed. The accessing controls the player apparatus 50 to accept, via a display unit which is not shown, retrieval of goods and contents similarly to the above-described mobile phone 6A in the goods distribution system 1 in Fig. 1 and to acquire an ID code. The retrieved ID code is recorded in the memory card 16 so as to be posted to the store terminals 45A to 45N, or is posted directly to the store terminals 45A to 45N via the transmitting/receiving unit 49.

This makes it possible in this embodiment to acquire an ID code by accessing by the player apparatus 50 that uses electronic contents and further to input the ID code to a store terminal.

Accordingly, in this embodiment, when the mobile phone 46A is operated to access the web server 14 and the player apparatus 50 is controlled to record an ID code in the memory card 16, similarly to the first embodiment, the transmitting/receiving unit 25 and the CPU 26 which constitute the mobile phone 6A form an access means that, by accessing retrieval data for retrieving an electronic content recorded in the web server 14, specifies a desired electronic content and that acquires an ID code specifying the electronic content, while the transmitting/receiving unit 47 and the player apparatus 50 form a recording means that records the ID code so that by specifying the electronic content by the ID code, the store terminals 5A to 5N, which are service providing terminals, can be accessed.

Differently from the above, when the player apparatus 50 is operated to use the mobile phone 46A as only a relay device to access the web server 14, and an ID code is recorded in the memory card 16, the transmitting/receiving unit 25 and the CPU 26 which constitute the mobile phone 6A form an access means that, by accessing retrieval data for retrieving an electronic content recorded in the web server 14, specifies a desired electronic content and that acquires an ID code specifying the electronic content, and the recorder/player unit 52 forms a recording means that records the ID code so that by specifying the electronic content by the ID code, the store terminals 5A to 5N, which are service providing terminals, can be accessed.

According to the construction shown in Fig. 22, by posting an ID code by wireless communication or optical communication, in addition to advantages similar to those in the first embodiment, the present invention is widely applied to cases in which downloading to various recording media is performed and in which accessing is performed by various information terminals, whereby usability for the user can be improved.

### 4. Fourth Embodiment

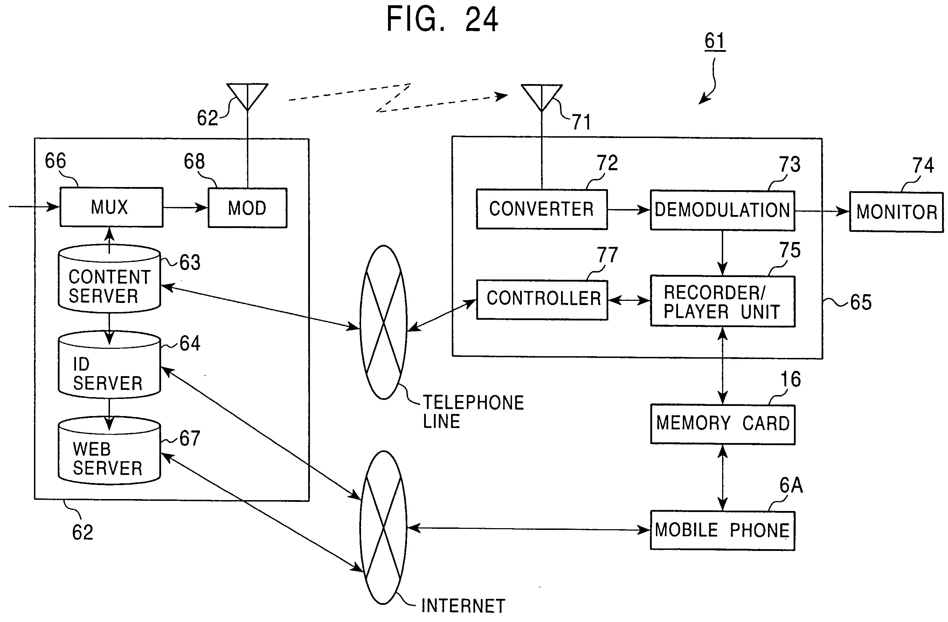

Fig. 24 is a block diagram showing a goods distribution system 61 according to a fourth embodiment of the present invention. This goods distribution system 61 uses digital data broadcasting to download electronic contents, such as game software and music, to users who wish for such contents.

In the goods distribution system 61, a broadcasting station 62 multiplexes a broadcast program with electronic contents such as music, and transmits the program from an antenna in digital broadcast waves. Specifically, the broadcasting station 62 records contents for use in data broadcasting in a content server 63, and retains ID codes that specify the contents in an ID code server 64. In the content server 63, accessing from a set-top box 65 by each user is accepted via a telephone line, and in response to a request from the set-top box 65, a content is data-processed so that the content can be used only in the set-top box 65 in connection with the request and is retained. The retained content is sent to a multiplexer (MUX) 66. In this process, the content server 63 accepts the specification of a content based on an ID code from the set-top box 65.

The broadcasting station 62 retains data for retrieving the contents in a web server 67. The web server 67 is designed so that the data for retrieving the contents can be accessed by homepages on the Internet. When a user designates by the accessing a content recorded in the content server 63, a corresponding ID code is sent from the ID code server 64.

Accordingly, in this embodiment, by using the mobile phone 6A to access the homepage of the broadcasting station 62, various types of contents provided by data broadcasting can be retrieved, and the an ID code that specifies a retrieved content can be acquired by the mobile phone 6A.

The multiplexer 66 outputs the contents, an electronic program guide or the like, and a broadcast program in an multiplexed form. A modulation circuit (MOD) generates digital broadcast waves by modulating output data from the multiplexer 66, and transmits the waves from the antenna.

By receiving and processing the digital broadcast waves, the set-top box 65 can receive a desired digital broadcast program and can acquire various electronic contents. Specifically, the set-top box 65 uses the antenna 71 to receive the digital broadcast waves, and the digital broadcast waves are down-converted and output by a converter 72. A demodulation circuit 73 obtains reproduced data by performing signal processing on an output signal from the converter 72, and outputs a video signal and an audio signal, which are related to a digital broadcast program selected by the user, to a monitor apparatus 74 by performing data processing on the reproduced data. Accordingly, in the goods distribution system 61, the digital broadcast program can be listened to by the monitor apparatus 74.

The demodulation circuit 73 outputs, to a recorder/player unit 75, the data of the electronic content transmitted by the data broadcasting by performing data processing on the reproduced data. The recorder/player unit 75 records the data of the electronic content in the memory card 16. Accordingly, in this embodiment, various contents transmitted by the data broadcasting can be downloaded in the memory card 16.

The controller 77 controls the operation of the set-top box 65, and selectively monitors a channel desired by the user by controlling the operation of the demodulation circuit 73, etc., in response to the operation of a remote controller (not shown). Under this control, when the user uses an ID code to command the downloading of a content, the monitor apparatus 74 displays a message to prompt input of the ID code by using the memory card 16 or input of the ID code by operating keys. When the user selects the input of the ID code by operating keys, the controller 77 accepts input of an ID code by operating the remote controller. Conversely, when the input of the ID code by the memory card 16 is selected, the user is instructed to load the memory card 16, and the recorder/player unit 75 is driven to acquire the ID code from the memory card 16.

When the controller 77 acquires the ID code, as described above, it is linked to the broadcasting station, and requests the downloading of the content by posting the ID code. In this processing, the controller 77 executes charging processing, as required. Accordingly, in this embodiment, the ID code is used to acquire also data broadcast contents.

Differently from the above, when the user operates the remote controller to command retrieval of a content, the controller 77 is controlled by the demodulation circuit 73 to display, on the monitor apparatus 74, a menu screen provided by the data broadcasting, and sequentially switches the displayed screen in accordance with selection of the menu on the displayed screen. These successive operations cause the controller 77 to accept the designation of the content by the user and further to acquire the ID code of the content from the data broadcast waves. Even if the controller 77 has acquired the ID code, it accesses the ID server 64 similarly to the above case of inputting the ID code by the memory card 16, whereby an electronic content desired by the user is recorded in the memory card 16.

In a case in which a content is selected as described above by performing selection on the displayed screen of the monitor apparatus 74, when the user is accustomed to the set-top box operation, or when the user is accustomed to selecting a content, relatively easy and rapid selection of the content can be performed. However, in a case in which the user is not accustomed to operating the set-top box, a time is required, which causes the loss of audition opportunities. However, in this embodiment, the downloading of a content can be performed using an ID code acquired by retrieving the content with a personally familiar mobile phone, a content desired by the user can be easily and securely obtained in the operation of the set-top box, which is provided with the content. Therefore, concerning such an audition of a program, the loss of the opportunities can be reduced.

### 5. Other Embodiments

In the foregoing embodiments, a case in which various contents are recorded in a memory card has been described. However, the present invention is not limited thereto, but can be widely applied to cases of recording to various types of recording media such as Minidisks and floppy disks.

In the foregoing embodiments, a case in which an ID code is also recorded in a recording medium for recording contents has been described. The present invention is not limited thereto, but an ID code may be separately recorded in various types of card-shaped recording media for use in personal authentication, electronic money, and member cards, such as non-contact IC cards.

In the foregoing embodiments, a case in which an electronic content is temporarily retained has been described. However, the present invention is not limited thereto, but can be widely applied to cases in which an electronic content is downloaded in real time via a store terminal.

In the foregoing embodiments, a case in which a mobile phone or a player apparatus acquires an ID code by accessing a web server has been described. However, the present invention is not limited thereto, but can be widely applied to the cases of accessing by a personal computer, a personal digital assistant (PDA), a radio, etc.

In the foregoing embodiments, a case in which music and game software are downloaded as electronic contents has been described. However, the present invention is not limited thereto, but can be widely applied to the cases of downloading various types of electronic contents such as, for example, an electronic book, text data such as a song card, and video data.

In the foregoing embodiments, a case in which a content is transmitted after compressing data has been described. However, the present invention is not limited thereto, but can be widely applied to the cases of transmission without performing compression.

In the foregoing embodiments, a case in which a content is transmitted via dedicated links using a satellite and digital broadcasting has been described. However, the present invention is not limited thereto, but can be widely applied to the cases of transmitting a content via various types of links such as CATV.

In the foregoing embodiments, a case in which a content is retrieved by providing text and music file as retrieval data in response to accessing using the Internet has been described. However, the present invention is not limited thereto, but in addition to these, the retrieval data can be composed of various types of data in the case of providing a still image of an artist.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An electronic content providing method for performing electronic content provision to a user by using an information terminal in a store, said electronic content providing method comprising the steps of:
acquiring an identification code for identifying an electronic content which is retrieved from among a plurality of electronic contents by using a user terminal linked via a network to a server in which the electronic contents are recorded; and
supporting the downloading of the retrieved electronic content to a recording medium by inputting the identification code to said information terminal, without performing, in said store, a process for retrieving a specified electronic content from the electronic contents.

2. An electronic content providing method for performing electronic content provision to a user by using an information terminal in a store, said electronic content providing method comprising the steps of:
downloading, to a portable recording medium, an identification code for identifying an electronic content which is retrieved from among a plurality of electronic contents by using a user terminal linked via a network to a server in which the electronic contents are recorded; and
supporting the downloading of the retrieved electronic content to the recording medium by supplying the identification code from the recording medium to said information terminal, without performing, in said store, a process for retrieving a specified electronic content from the electronic contents.

3. An electronic content providing method for performing electronic content provision to a user by using an information terminal in a store, said electronic content providing method comprising the steps of:
retrieving a content from a plurality of electronic contents by using a user terminal linked via a network to a server in which the electronic contents are recorded, and downloading an identification code for identifying the retrieved electronic content;
verifying the retrieved electronic content by inputting the downloaded identification code to said information terminal, without performing, in said store, a process for retrieving a specified electronic content from the electronic contents; and
downloading the retrieved electronic content to a recording medium loaded into said information terminal.

4. An electronic content providing method for performing electronic content provision to a user by using a store terminal in a store, said electronic content providing method comprising the steps of:
acquiring an identification code for identifying an electronic content which is retrieved from a plurality of electronic contents by using a user terminal to access via a network a server in which the electronic contents are recorded;
inputting the identification code to said store terminal, without using said store terminal to perform a process for retrieving a specified electronic content from the electronic contents; and
supporting the purchase of the electronic content corresponding to the identification code.

5. An electronic content providing method for performing electronic content provision to a user by using a store terminal which is installed in a store and which is linked via broadband link to a server in which a plurality of electronic contents are recorded, said electronic content providing method comprising the steps of:
acquiring an identification code for identifying an electronic content which is retrieved from the electronic contents by using a user terminal linked via a narrowband link to said server; and
supporting the purchase of the electronic content corresponding to the identification code by inputting the identification code to said store terminal, without using said store terminal to perform a process for retrieving a specified electronic content from the electronic contents.

6. A computer program comprising instructions which when run on a suitable processing system configure the system to operate in accordance with the method of claim 1, 2, 3, 4 or 5.

7. A storage medium storing a program according to claim 6.

8. A system configured to operate in accordance with claim 1, 2, 3, 4 or 5.
